# EUROPÄISCHE PATENTANMELDUNG

(11) **EP 4 495 159 A1**
(43) Veröffentlichungstag der Anmeldung: **22.01.2025**
(21) Anmeldenummer: 23186903.3
(22) Anmeldetag: 21.07.2023
(51) Int. Cl.: C08G 59/50

(54) **KLEBSTOFF MIT VERBESSERTER HAFTUNG AUF EPOXIDHARZ-KLEBSTOFFRESTEN**

(71) Anmelder: Sika Technology AG, 6340 Baar (CH)
(72) Erfinder: ILLI, Tobias, 8953 Dietikon (CH)
(74) Vertreter: Sika Patent Attorneys

(57) **Zusammenfassung**

Gegenstand der Erfindung ist die Verwendung eines Epoxidharz-Klebstoffs zum Verkleben eines mindestens teilweise mit einem ausgehärteten Epoxidharzklebstoff beschichteten Substrates, dadurch gekennzeichnet, dass der Klebstoff eine HarzKomponente enthaltend mindestens ein Epoxidharz und eine Härter-Komponente enthaltend mindestens ein Amin mit mindestens einer aliphatischen Aminogruppe, wobei Amin ausgewählt ist aus Polyetheraminen und linearen oder verzweigten, aber nicht zyklischen, aliphatischen Polyaminen, umfasst, wobei das Amin mindestens 50 Gewichts-% aller in der Härter-Komponente enthaltenen Aminhärter mit mindestens einem Aminwasserstoff ausmacht, bezogen auf alle Aminhärter in der Härter-Komponente.

Die erfindungsgemässe Verwendung ermöglicht das Verkleben von mindestens teilweise mit einem ausgehärteten Epoxidharzklebstoff beschichteten Substraten unter Ausbildung eines stabilen, witterungsbeständigen Klebeverbundes und ist besonders geeignet für die Reparatur von Rotorblättern in Windkraftanlagen.

## Beschreibung

### Technisches Gebiet

Die Erfindung betrifft Verwendung eines Klebstoffs zum Verkleben eines mindestens teilweise mit einem ausgehärteten Epoxidharzklebstoff beschichteten Substrates sowie einen Klebeverbund erhalten aus dieser Verwendung.

### Stand der Technik

Windkraftanlagen spielen eine immer grösser werdende Rolle bei der Energieversorgung, insbesondere als zunehmend wichtige umweltfreundliche Energiequelle im Sinne der Nachhaltigkeit. Windkraftanlagen sind mit Abstand die wichtigste Form der Windenergienutzung. Heutige Windkraftanlagen verfügen fast ausnahmslos über drei Rotorblätter, die sich in genügender Höhe innerhalb der Windströmung befinden. Mit diesen Rotorblättern wird der Windströmung Energie entnommen und einem Generator zur Stromerzeugung zugeführt. Rotorblätter bestehen in der Regel aus glasfaserverstärktem Kunststoff (GFK) und werden zumeist in Halbschalen-Sandwichbauweise mit Versteifungsholmen oder -stegen im Inneren hergestellt. Bei der Herstellung von Rotorblättern werden die Halbschalen meist mittels eines strukturellen Klebstoffes verklebt, beispielsweise SikaPower^{®}-830 von Sika. Gerade Epoxidharzklebstoffe sind aufgrund ihrer robusten mechanischen Eigenschaften und ihres Adhäsionsvermögens sehr gut geeignet für solche strukturellen Verklebungen, insbesondere wenn sie einen Schlagzähigkeitsmodifikator (Toughener) enthalten, welcher den ansonsten oft spröden Epoxidklebstoffen ausreichende Schlagzähigkeit und Zähelastizität verleiht. Bei der Neuherstellung von Rotorblättern sind heutige Epoxidharzklebstoffe diesem Zweck zufriedenstellend. Allerdings sind Rotorblätter von Windkraftanlagen sehr starken Kräften und schädigenden Umwelteinflüssen wie Kollisionen mit Eispartikeln und Wassertropfen ausgesetzt, was im Laufe ihres Einsatzes zu Schäden an den Rotorblättern führt. Aus wirtschaftlicher Sicht ist es nicht erwünscht, die Rotorblätter laufend durch neue Ersatzblätter zu ersetzen, sondern es wird versucht, Schäden zu reparieren und höchstens Teile des Rotorblattes zu ersetzen oder zu reparieren. Bei solchen Ersatz- oder Reparaturoperationen ist das Ziel, die beschädigte Stelle auf die ursprüngliche strukturelle Integrität wie nach der Herstellung des Rotorblattes zurückzubringen. Bei Reparaturen kommt es oft vor, dass Klebstoffüberreste der ursprünglichen Verklebung aus der Erstherstellung vorhanden sind. Diese können oft nicht rückstandslos entfernt werden. Solche ausgehärteten Epoxidklebstoffreste sind jedoch sehr viel schwieriger neu zu verkleben oder zu überkleben als ein sauberes, neuwertiges Substrat. Da diese Klebstoffreste kaum rückstandslos zu entfernen sind, können sie eine zweite Verklebung signifikant schwächen, da ein frisch applizierter Epoxidharzklebstoff, selbst wenn es sich um denselben Klebstoff wie bei der Erstherstellung handelt, keine für die hohe mechanische Belastung ausreichende Adhäsion auf dem möglicherweise verschmutzten, ausgehärteten Klebstoff rest aufbauen kann. Zudem ist es das Ziel, mit dem Reparaturklebstoff nach der Reparatur eine gleichwertige Verklebung wie bei der Erstherstellung zu erhalten. Dies ist ein grosses Problem bei der Reparatur von Rotorblättern von Windkraftanlagen, da reparierte Rotorblätter denselben Einflüssen ausgesetzt sind und dieselben Anforderungen bezüglich mechanischer Stabilität aufweisen müssen wie neu hergestellte.

Es besteht daher das Bedürfnis nach einem Klebstoff, der problemlos auf Resten von ausgehärteten Epoxidharzklebstoffen haftet und der für eine solche strukturelle Verklebung verwendet werden kann.

### Darstellung der Erfindung

Aufgabe der vorliegenden Erfindung ist es daher, einen Klebstoff zum Verkleben eines mindestens teilweise mit einem ausgehärteten Epoxidharzklebstoff beschichteten Substrates bereitzustellen, der auch ohne aufwändige Vorbehandlung oder kompletter Entfernung des ausgehärteten Epoxidharzklebstoffs einen belastbaren Klebeverbund mit hoher Beständigkeit gegenüber dem Einfluss von Witterung und mechanischer Belastung ermöglicht. Überraschenderweise wird diese Aufgabe mit der Verwendung eines Klebstoffs gemäss Anspruch 1 gelöst. Der dabei eingesetzte Epoxidharz-Klebstoff umfasst eine Härter-Komponente enthaltend mindestens ein Amin **A1** mit mindestens einer aliphatischen Aminogruppe, wobei Amin **A1** ausgewählt ist aus Polyetheraminen und linearen oder verzweigten, aber nicht zyklischen, aliphatischen Polyaminen, und wobei das Amin **A1** mindestens 50 Gewichts-% aller in der Härter-Komponente enthaltenen Aminhärter **A** mit mindestens einem Aminwasserstoff ausmacht, bezogen auf alle Aminhärter **A** in der Härter-Komponente.

Überraschenderweise ermöglicht ein Epoxidharzklebstoff mit einer solchen Härter-Komponente eine ausgezeichnete, starke Haftung zu Substraten, welche mindestens teilweise mit einem ausgehärteten Epoxidharzklebstoff beschichtet sind. Übliche Epoxidharzklebstoffe des Standes der Technik vermögen meist keine genügende Haftung auf solchen Substraten aufzubauen, da der Klebeverbund des frisch applizierten Epoxidharzklebstoff mit den Resten des ursprünglich vorhandenen, komplett ausgehärteten Epoxidharzklebstoffs ungenügende Adhäsionskraft aufweist.

Die erfindungsgemässe Verwendung ermöglicht das Verkleben von solchen Substraten, wie sie beispielsweise bei zu reparierenden Rotorblättern von Windkraftanlagen vorkommen. Damit können Klebeverbunde hergestellt werden, die genügend stark und beständig sind, dass das reparierte Rotorblatt eine ähnliche Stabilität und Lebensdauer aufweisen kann wie ein neu hergestelltes. Mit der erfindungsgemässen Verwendung können so kostengünstige Reparaturen anstelle von kompletten Ersatzmassnahmen durchgeführt werden, was nicht nur wirtschaftlich sinnvoll ist, sondern auch bezüglich Rohstoff- und Energiebedarf und geringerer Ausfallzeit der Windkraftanlage die aktuellen Bestrebungen zur erhöhten Nachhaltigkeit unterstützt.

Die erfindungsgemässen Klebstoffe im erfindungsgemässen Verfahren ermöglichen Klebeverbunde mit Zugscherfestigkeiten, gemessen nach DIN EN 1465, von mindestens 10 MPa, bevorzugt mindestens 15 MPa, insbesondere mindestens 20 MPa oder höher.

### Wege zur Ausführung der Erfindung

Gegenstand der Erfindung ist die Verwendung eines Klebstoffs zum Verkleben eines mindestens teilweise mit einem ausgehärteten Epoxidharzklebstoff beschichteten Substrates, dadurch gekennzeichnet, dass der Klebstoff
- eine Harz-Komponente enthaltend mindestens ein Epoxidharz und
- eine Härter-Komponente enthaltend mindestens ein Amin **A1** mit mindestens einer aliphatischen Aminogruppe, wobei Amin **A1** ausgewählt ist aus Polyetheraminen und linearen oder verzweigten, aber nicht zyklischen, aliphatischen Polyaminen,
umfasst, wobei das Amin **A1** mindestens 50 Gewichts-% aller in der Härter-Komponente enthaltenen Aminhärter **A** mit mindestens einem Aminwasserstoff ausmacht, bezogen auf alle Aminhärter **A** in der Härter-Komponente.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Topfzeit" eines Klebstoffs wird die maximale Zeitspanne ab dem Mischen der Komponenten und der Applikation des Klebstoffs bezeichnet, in der der vermischte Klebstoff in einem ausreichend fliessfähigen Zustand ist und die Substratoberflächen gut benetzen kann.

Als "Offenzeit" eines Klebstoffs wird die für eine kraftschlüssige Verbindung maximal mögliche Zeitspanne zwischen dem Mischen des Klebstoffs und dem Fügen der zu verklebenden Teile bezeichnet.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Die Harz- und die Härter-Komponente des Klebstoffs werden separat voneinander in getrennten Gebinden gelagert und erst kurz vor oder während der Applikation miteinander vermischt.

Ein geeignetes Epoxidharz wird auf bekannte Art und Weise erhalten, insbesondere aus der Oxidation von Olefinen oder aus der Reaktion von Epichlorhydrin mit Polyolen, Polyphenolen oder Aminen.

Bevorzugt sind aromatische Epoxidharze, insbesondere die Glycidylether von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan,
- Dihydroxybenzol-Derivaten wie Resorcin, Hydrochinon oder Brenzkatechin,
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1 -Bis(4-hydroxyphenyl)-1 -phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)-ethan, Bis(4-hydroxyphenyl)ether oder Bis(4-hydroxyphenyl)sulfon,
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind,
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A, -F oder -A/F Flüssigharz, beziehungsweise die Glycidylisierungsprodukte von hydriertem Bisphenol-A, -F oder-A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Weitere geeignete Epoxidharze sind solche aus der Umsetzung von biobasierten hydroxyfunktionellen Rohstoffen mit Epichlorhydrin, insbesondere Vanillin-basierte Epoxidharze wie insbesondere Diglycidylether von Vanillinalkohol, oder Glycerolbasierte Epoxidharze.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Besonders bevorzugt enthält die Harz-Komponente mindestens ein aromatisches Epoxid-Flüssigharz, insbesondere ein Bisphenol A-Diglycidylether, ein Bisphenol F-Diglycidylether oder ein Phenol-Formaldehyd Novolak-Glycidylether, wobei der Phenol-Formaldehyd Novolak-Glycidylether bevorzugt eine mittlere Funktionalität im Bereich von 2.3 bis 4, bevorzugt 2.5 bis 3, aufweist. Diese Epoxidharze sind sehr hydrophob und weisen eine für Epoxidharze niedrige Viskosität auf. Sie ermöglichen eine gute Verarbeitbarkeit, eine schnelle Aushärtung und hohe Haftkräfte.

Bevorzugt weist das aromatische Epoxid-Flüssigharz ein mittleres Epoxid-Equivalentgewicht von 150 bis 250 g/eq auf.

Bevorzugt enthält die Harz-Komponente zusätzlich mindestens einen Epoxidgruppen-haltigen Reaktivverdünner.

Dafür geeignet sind insbesondere 1,4-Butandioldiglycidylether, 1,6-Hexandioldiglycidylether, Trimethylolpropandi- oder -triglycidylether, Phenylglycidylether, Kresylglycidylether, Guajacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt als Reaktivverdünner ist 1,4-Butandioldiglycidylether, 1,6-Hexandioldiglycidylether, p-tert.Butylphenylglycidylether, Cardanolglycidylether oder C₈- bis C₁₀- oder C₁₂- bis C₁₄- oder C₁₃- bis C₁₅-Alkylglycidylether.

Besonders bevorzugt ist 1,4-Butandioldiglycidylether und/oder 1,6-Hexandioldiglycidylether. Ein solcher Klebstoff ermöglicht besonders hohe Haftkräfte bei guter Wasserfestigkeit der Verklebung.

Bevorzugt liegt das Gewichtsverhältnis zwischen aromatischen Epoxid-Flüssigharzen und Epoxidgruppen-haltigen Reaktivverdünnern im Bereich von 60/40 bis 95/5, insbesondere 70/30 bis 95/5.

Die Härter-Komponente enthält mindestens ein Amin **A1** mit mindestens einer aliphatischen Aminogruppe, insbesondere einer aliphatischen primären Aminogruppe, wobei Amin **A1** ausgewählt ist aus Polyetheraminen und linearen oder verzweigten, aber nicht zyklischen, aliphatischen Polyaminen. Dabei macht das Amin **A1** mindestens 50 Gewichts-%, bevorzugt mindestens 55 Gewichts-%, insbesondere mindestens 60 Gewichts-%, insbesondere mindestens 75 Gewichts-% aller in der Härter-Komponente enthaltenen Aminhärter **A** mit mindestens einem Aminwasserstoff aus, bezogen auf alle Aminhärter **A** in der Härter-Komponente. In einigen Ausführungsformen macht das Amin **A1** mindestens 80 Gewichts-%, insbesondere mindestens 90 Gewichts-%, bevorzugt mindestens 95 Gewichts-%, besonders bevorzugt mindestens 99 Gewichts-%, am meisten bevorzugt 100 Gewichts-% aller in der Härter-Komponente enthaltenen Aminhärter **A** mit mindestens einem Aminwasserstoff aus, bezogen auf alle Aminhärter **A** in der Härter-Komponente. Amin **A1** kann dabei auch eine Mischung aus mehreren verschiedenen Aminen **A1** darstellen.

Geeignet als Amin **A1** sind beispielsweise handelsübliche Polyamine mit aliphatisch gebundenen Aminogruppen, wie sie üblicherweise zum Aushärten von Epoxidharzen eingesetzt werden. Gleichsam übliche cycloaliphatische Polyamine wie beispielsweise Isophorondiamin (IPDA) oder arylaliphatische Polyamine wie m-Xylylendiamin (MXDA) hingegen sind überraschenderweise nicht als Amin **A1** geeignet, da sie nicht die erwünschte Adhäsionskraft und -beständigkeit in der erfindungsgemässen Verwendung ermöglichen.

Bevorzugt enthält das Amin **A1** mindestens zwei Aminwasserstoffe, insbesondere mindestens drei Aminwasserstoffe.

Bevorzugt ist das Amin **A1** ausgewählt aus der Gruppe bestehend aus 2-Dimethylaminoethylamin, 3-Dimethylaminopropylamin (DMAPA), 4-Dimethylaminobutylamin, 6-Dimethylaminohexylamin, 2-(2-Dimethylaminoethylamino)ethylamin, 2-(3-Dimethylaminopropylamino)ethylamin, 3-(2-Dimethylaminoethylamino)propylamin, 3-(3-Dimethylaminopropylamino)propylamin (DMAPAPA), Bis(2-dimethylaminoethyl)amin, Bis(3-dimethylaminopropyl)amin und Bis(6-dimethylaminohexyl)amin.

Besonders bevorzugt als Amin **A1** ist 3-(3-Dimethylaminopropylamino)propylamin (DMAPAPA). Es ist geruchsarm, toxikologisch vorteilhaft, kommerziell gut verfügbar und ermöglicht sehr hohe Haftkräfte bei guter Wasserbeständigkeit der Verklebung.

Weiterhin bevorzugt als Amin **A1** ist 3-Dimethylaminopropylamin (DMAPA). Es weist eine besonders hohe Konzentration an Dimethylaminogruppen auf und ist kommerziell gut verfügbar.

Ebenfalls bevorzugt ist das Amin **A1** ausgewählt aus der Gruppe bestehend aus 1,5-Diamino-2-methylpentan (MPMD), 1,6-Hexandiamin, 2,2(4),4-Trimethyl-1,6-hexandiamin (TMD), 2-Butyl-2-ethyl-1,5-pentandiamin (C11-Neodiamin), Diethylentriamin (DETA), Triethylentetramin (TETA), Tetraethylenpentamin (TEPA), Dipropylentriamin (DPTA), N-(2-Aminoethyl)-1,3-propandiamin (N3-Amin), N,N'-Bis(3-aminopropyl)ethylendiamin (N4-Amin), Bis(1,6-hexylen)triamin (BHMT), und Kombinationen aus zwei oder mehr dieser Amine.

In besonders bevorzugten Ausführungsformen der Verwendung gemäss vorliegender Erfindung ist das Amin **A1** ausgewählt aus der Gruppe bestehend aus 2-Dimethylaminoethylamin, 3-Dimethylaminopropylamin, 4-Dimethylaminobutylamin, 6-Dimethylaminohexylamin, 2-(2-Dimethylaminoethylamino)ethylamin, 2-(3-Dimethylaminopropylamino)ethylamin, 3-(2-Dimethylaminoethylamino)propylamin, 3-(3-Dimethylaminopropylamino)propylamin, 1,5-Diamino-2-methylpentan, 1,6-Hexandiamin, 2,2(4),4-Trimethyl-1,6-hexandiamin, 2-Butyl-2-ethyl-1,5-pentandiamin, Diethylentriamin, Triethylentetramin, Tetraethylenpentamin, Dipropylentriamin, N-(2-Aminoethyl)-1,3-propandiamin, N,N'-Bis(3-aminopropyl)ethylendiamin, Bis(1,6-hexylen)triamin, Polyetheraminen, und Kombinationen aus zwei oder mehr dieser Amine.

In denselben oder anderen besonders bevorzugten Ausführungsformen der Verwendung gemäss vorliegender Erfindung umfasst das Amin **A1** mindestens ein Polyetheramin, welches bevorzugt ein Polyoxyalkylendiamin oder-triamin ist, insbesondere ein Polyoxyalkylendiamin, bevorzugt mit einem zahlenmittleren Molekulargewicht zwischen 170 und 500 g/mol. In einigen bevorzugten Ausführungsformen davon besteht das Amin **A1** aus mindestens einem Polyetheramin.

Geeignet als Polyetheramine für Amin **A1** sind beispielsweise aliphatische primäre Diamine, die Ethergruppen enthalten, z.B. Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis-(3-aminopropyl)polytetrahydrofurane und andere Polytetrahydrofurandiamine mit Molekulargewichten im Bereich von z.B. 350 bis 2000, sowie Polyoxyalkylendiamine. Letztere sind typischerweise Produkte der Aminierung von Polyoxyalkylendiolen und können z. B. unter dem Namen Jeffamine^{®} (von Huntsman), unter dem Namen Polyetheramin (von BASF) oder unter dem Namen PC Amine^{®} (von Nitroil) bezogen werden. Besonders geeignete Polyoxyalkylendiamine sind Jeffamine^{®} D-230, Jeffamine^{®} D-400, Jeffamine^{®} D-2000, Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000.

Am meisten bevorzugte Polyetheramine sind beispielsweise erhältlich unter dem Handelsnamen Jeffamine^{®} von Huntsman, insbesondere Jeffamine^{®} D-230.

Die Härterkomponente enthält Aminhärter **A** mit mindestens einem Aminwasserstoff, wobei Amin **A1** mindestens 50 Gewichts-% der Aminhärter **A** ausmachen muss. In einigen Ausführungsformen kann der Aminhärter **A** komplett aus Aminen **A1** bestehen.

Aminhärter **A** kann aber bevorzugt auch weitere Aminhärter mit mindestens einem Aminwasserstoff enthalten, welche keine Aminhärter **A1** sind. Dabei können diese weiteren Aminhärter bis zu 50 Gewichts-%, bevorzugt bis zu 45 Gewichts-%, insbesondere bis zu 40 Gewichts-% oder weniger aller Aminhärter **A** mit mindestens einem Aminwasserstoff ausmachen.

Bevorzugt enthält die Härterkomponente neben Amin **A1** noch weitere Aminhärter, welche zusammen mit dem Amin **A1** die Gesamtheit der Aminhärter **A** mit mindestens einem Aminwasserstoff ausmachen.

Als weitere Aminhärter bevorzugt sind cycloaliphatische oder arylaliphatische Polyamine mit mindestens 2, insbesondere mindestens 3, Aminwasserstoffen, wie insbesondere 1,2-, 1,3- oder 1,4-Diaminocyclohexan, 1,3-Bis(aminomethyl)-cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo[5.2.1.0^{2,6}]-decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)-benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), 2-Aminoethylpiperazin, N-Benzyldiethylentriamin, N-Benzyltriethylentetramin, N,N'-Dibenzyltriethylentetramin, N"-Benzyl-N,N'-bis(3-aminopropyl)ethylendiamin, N",N‴-Dibenzyl-N,N'-bis(3-aminopropyl)ethylendiamin, N-Benzyl-1,2-propandiamin, N,N'-Dibenzyl-1,2-propandiamin, N-Benzyl-1,3-bis(aminomethyl)benzol, N,N'-Dibenzyl-1,3-bis(aminomethyl)benzol, N-(2-Ethylhexyl)-1,3-bis(aminomethyl)benzol, N,N'-Bis(2-ethylhexyl)-1,3-bis(aminomethyl)benzol, styrolisiertes MXDA (erhältlich als Gaskamine^{®} 240 von Mitsubishi Gas Chemical), Addukte der obengenannten oder weiterer Polyamine mit Epoxiden oder Epoxidharzen, insbesondere Addukte mit Diepoxiden oder Monoepoxiden, oder Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, oder Mannich-Basen, insbesondere Phenalkamine, also Umsetzungsprodukte von Phenolen, insbesondere Cardanol, mit Aldehyden, insbesondere Formaldehyd, und Polyaminen.

Bevorzugt enthält der Aminhärter **A** mindestens ein weiteres Amin ausgewählt aus der Gruppe bestehend aus TMD, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, sowie Phenalkamine.

Davon bevorzugt ist TMD, 1,3-Bis(aminomethyl)cyclohexan, IPDA, MXDA, sowie Phenalkamine.

Als Phenalkamine geeignet sind insbesondere Umsetzungsprodukte von Cardanol mit Formaldehyd und Polyaminen. Als Phenalkamide geeignet sind insbesondere Phenalkamine, welche zusätzlich Amidgruppen enthalten. Als Polyamidoamine geeignet sind insbesondere Umsetzungsprodukte aus Dimerfettsäuren mit Polyalkylenaminen wie insbesondere DETA, TETA oder TEPA.

In besonders bevorzugten Ausführungsformen der Verwendung gemäss vorliegender Erfindung umfasst das Amin **A** mindestens ein Phenalkamin, welches ein Umsetzungsprodukt von Cardanol mit Formaldehyd und mindestens einem aliphatischen Polyamin, insbesondere einem aliphatischen Polyamin wie weiter oben als Amin **A1** beschrieben, ist.

Cardanol (CAS-Registernummer: 37330-39-5) ist ein phenolisches Lipid, das aus Anacardsäure gewonnen wird, dem Hauptbestandteil von Cashew-Nussschalenflüssigkeit (CNSL), einem Nebenprodukt der Cashew-Nussverarbeitung. Der Name der Substanz leitet sich von der Gattung Anacardium ab, zu der auch der Cashewbaum, Anacardium occidentale, gehört. Die Struktur ist in Formel (I) dargestellt.

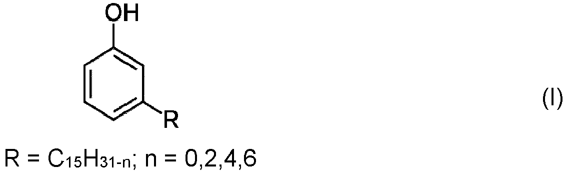

Die Bezeichnung Cardanol wird für die decarboxylierten Derivate verwendet, die durch thermische Zersetzung einer der natürlich vorkommenden Anacardinsäuren gewonnen werden. Es handelt sich dabei um mehr als eine Verbindung, da die Zusammensetzung der Seitenkette in ihrem Ungesättigtheitsgrad variiert. Das dreifach ungesättigte Cardanol, der Hauptbestandteil (41 %), ist in der nachstehenden Formel (II) dargestellt. Das restliche Cardanol ist zu 34 % einfach ungesättigt, zu 22 % zweifach ungesättigt und zu 2 % gesättigt.

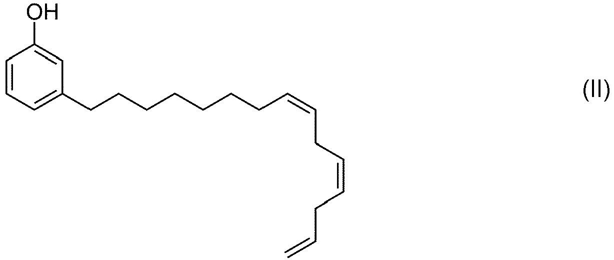

Besonders bevorzugt sind Phenalkamine oder Phenalkamide, insbesondere lösemittelfreie Phenalkamine oder Phenalkamide, wie sie von der Firma Cardolite kommerziell vertrieben werden, insbesondere Phenalkamine wie Cardolite^{®} NC-658, Cardolite^{®} NC-540, Cardolite^{®} NC-558, Cardolite^{®} LITE 2002, und Phenalkamide wie Cardolite^{®} LITE 3025, LITE 3040 oder LITE 3060 (alle von Cardolite).

Bevorzugt kann der Härter **A** eine Kombination aus zwei oder mehr der genannten weiteren Amine enthalten.

In der am meisten bevorzugten Ausführungsform enthält die Härter-Komponente als Amin **A1** eine Kombination aus 3-(3-Dimethylaminopropylamino)propylamin (DMAPAPA) und mindestens einem Polyetheramin.

In denselben oder anderen besonders bevorzugten Ausführungsformen der Verwendung gemäss vorliegender Erfindung enthält die Härter-Komponente zwischen 20 Gewichts-% und 75 Gewichts-%, bevorzugt zwischen 25 Gewichts-% und 70 Gewichts-%, insbesondere zwischen 30 Gewichts-% und 60 Gewichts-%, Amin **A1,** bezogen auf die gesamte Härter-Komponente.

Die bevorzugten Amine und Mengen ermöglichen Klebstoffe mit besonders hohen Haftkräften bei hoher Beständigkeit der Verklebung gegenüber Feuchtigkeit.

Bevorzugt enthält der Klebstoff weitere Inhaltsstoffe, wobei diese als Bestandteil der Harz- und/oder der Härter-Komponente und/oder als weitere separate Komponente vorhanden sind. Gegenüber Aminwasserstoffen reaktive Bestandteile liegen bevorzugt als Bestandteil der Harz-Komponente vor. Gegenüber Epoxidgruppen reaktive Bestandteile liegen bevorzugt als Bestandteil der Härter-Komponente vor.

Bevorzugt enthält der Klebstoff mindestens einen weiteren Inhaltsstoff ausgewählt aus Verdünnern, Füllstoffen, Haftvermittlern, Beschleunigern und oberflächenaktiven Verbindungen.

Als Verdünner geeignet sind insbesondere solche mit einem Siedepunkt von mindestens 200 °C bei Normaldruck, insbesondere 2-Phenoxyethanol, 2-Benzyloxyethanol, Benzylalkohol, Ethylenglykoldibutylether, Ethylenglykoldiphenylether, Diethylenglykol, Diethylenglykolmonoethylether, Diethylenglykolmono-n-butylether, Diethylenglykoldi-n-butylylether, Propylenglykolphenylether, Dipropylenglykol, Dipropylenglykoldi-n-butylether, Diphenylmethan, Diisopropylnaphthalin, propyliertes Biphenyl, tert.Butylphenol, Nonylphenol, Dodecylphenol, Cardanol (aus Cashewschalen-Öl, enthaltend als Hauptbestandteile 3-(7-Pentadecenyl)phenol, 3-(7,10,14-Pentadecatrienyl)phenol und 3-(7,10-Pentadecadienyl)phenol), styrolisiertes Phenol, Bisphenole, aromatische Kohlenwasserstoffharze, insbesondere Phenolgruppen-haltige Typen, Adipate, Sebacate, Phthalate, Benzoate, organische Phosphor- oder Sulfonsäureester oder Sulfonamide.

Bevorzugt sind Benzylalkohol, styrolisiertes Phenol, ethoxyliertes Phenol wie insbesondere 2-Phenoxyethanol, phenolgruppenhaltige aromatische Kohlenwasserstoffharze, insbesondere die Novares^{®}-Typen LS 500, LX 200, LA 300 oder LA 700 (von Rütgers), Diisopropylnaphthalin, propyliertes Biphenyl oder Cardanol.

Bevorzugt enthält der Klebstoff nur einen geringen Gehalt an Verdünnern. Bevorzugt enthält der Klebstoff bezogen auf 100 Gewichtsteile der Summe aller Epoxid- und Amingruppen-haltigen Bestandteile höchstens 30 Gewichtsteile, bevorzugt höchstens 20 Gewichtsteile, besonders bevorzugt höchstens 10 Gewichtsteile, insbesondere höchstens 5 Gewichtsteile, Verdünner. Dies ermöglicht Verklebungen mit besonders hoher Beständigkeit gegenüber Feuchtigkeit.

Geeignete Füllstoffe sind insbesondere gemahlene oder gefällte Calciumcarbonate, welche gegebenenfalls mit Fettsäure, insbesondere Stearaten, beschichtet sind, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Bevorzugt enthält der Klebstoff mineralische Füllstoffe, insbesondere ausgewählt aus Calciumcarbonat, Baryt, Talk, Silica Quarzmehl, Quarzsand, Kaolin und Kombinationen dieser Füllstoffe. Besonders bevorzugt ist die Kombination aus Calciumcarbonat (Kalk) und Silica als Füllstoff.

Bevorzugt enthält der Klebstoff bezogen auf den gesamten Klebstoff 10 bis 60 Gewichts-%, insbesondere 15 bis 50 Gewichts-%, mineralische Füllstoffe.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren oder Säureester; weiterhin Nitrate wie insbesondere Calciumnitrat; tertiäre Amine, Imidazole, Ammoniumsalze, Amidine, Guanidine, Phenole, Phenol-Harze oder Mannich-Basen wie insbesondere 2,4,6-Tris(dimethylaminomethyl)phenol, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol oder eine Kombination dieser Beschleuniger.

Geeignete oberflächenaktive Verbindungen sind insbesondere Verdicker, Netzmittel, Entschäumer oder Entlüfter.

Der Klebstoff ist bevorzugt nicht wasserbasiert. Er enthält bevorzugt weniger als 5 Gewichts-%, insbesondere weniger als 1 Gewichts-%, Wasser bezogen auf den gesamten Klebstoff.

Bevorzugt umfasst die Zusammensetzung, insbesondere in die Harz-Komponente, mindestens einen Schlagzähigkeitsmodifikator, bevorzugt einen Schlagzähigkeitsmodifikator auf Polyurethan-Basis.

Unter "Schlagzähigkeitsmodifikator" oder wird in diesem Dokument ein Additiv zu einer Epoxidharzmatrix verstanden, welches schon bei geringen Anteilen in der Zusammensetzung, z.B. von 1 bis 25 Gew.-%, bezogen auf die gesamte Zusammensetzung, eine deutliche Erhöhung der Zähigkeit der ausgehärteten Matrix bewirkt, so dass höhere Biege-, Zug-, Stoss- und/oder Schlagbeanspruchungen ausgehalten werden können, bevor die ausgehärtete Zusammensetzung reisst oder bricht. Üblicherweise wird das Messverfahren nach ISO 11343 als Mass für die Schlagzähigkeit verwendet.

Geeignete Schlagzähigkeitsmodifikatoren I sind z.B. sogenannte Core-Shell-Polymere. Core-Shell-Polymere bestehen aus einem elastischen Kernpolymer und einem starren Schalenpolymer. Besonders geeignete Core-Shell-Polymere bestehen aus einem Kern aus elastischem Acrylat- oder Butadienpolymer, der sich um eine starre Schale aus einem steifen thermoplastischen Polymer wickelt. Diese Kern-Schale-Struktur bildet sich entweder spontan durch Entmischung eines Blockcopolymers oder wird durch die Polymerisation als Latex- oder Suspensionspolymerisation mit anschließender Pfropfung vorgegeben.

Bevorzugte Core-Shell -Polymere sind sogenannte MBS-Polymere, die unter den Handelsnamen Clearstrength^{®} von Arkema, Paraloid^{®} von Dow (ehemals Rohm and Haas) oder F-351^{®} von Zeon im Handel erhältlich sind. Besonders bevorzugt sind Core-Shell-Polymerpartikel, die bereits als getrockneter Polymerlatex vorliegen. Beispiele sind GENIOPERL^{®} M23A von Wacker mit Polysiloxan-Kern und Acrylat-Schale, strahlenvernetzte Kautschukpartikel der NEP-Serie, hergestellt von Eliokem, oder Nanoprene^{®} von Lanxess oder Paraloid^{®} EXL von Dow. Weitere vergleichbare Beispiele für Core-Shell-Polymere werden unter dem Namen Albidur^{®} von Evonik Hanse GmbH, Deutschland, angeboten. Ebenfalls geeignet sind nanoskalige Silikate in einer Epoxidmatrix, wie sie unter dem Handelsnamen Nonopox^{®} von der Evonik Hanse GmbH angeboten werden.

Als Schlagzähigkeitsmodifikator eignet sich ferner ein Flüssigkautschuk, der ein carboxyl- oder epoxidterminiertes Acrylnitril/Butadien-Copolymer oder ein Derivat davon ist. Solche Flüssigkautschuke sind z. B. unter dem Namen Hypro^{®} (früher Hycar^{®}) CTBN und CTBNX und ETBN von Emerald Performance Materials LLC im Handel erhältlich. Derivate, die insbesondere epoxidhaltige elastomermodifizierte Präpolymere sind, wie z.B. aus der Produktlinie Polydis^{®}, Struktol^{®} (Schill + Seilacher Gruppe, Deutschland) oder aus der Produktlinie Albipox^{®} (Evonik Hanse GmbH, Deutschland). In einer anderen Ausführungsform handelt es sich bei dem Schlagzähigkeitsmodifikator um einen Polyacrylat-Flüssigkautschuk, der mit flüssigen Epoxidharzen vollständig mischbar ist und erst bei der Aushärtung der Epoxidharzmatrix in Mikrotröpfchen zerfällt. Solche Polyacrylat-Flüssigkautschuke sind z. B. unter der Bezeichnung 20208-XPA von Dow (früher Rohm and Haas) erhältlich.

Als Schlagzähigkeitsmodifikator eignet sich auch ein Reaktionsprodukt aus einem carboxylierten Nitrilfestkautschuk mit überschüssigem Epoxidharz.

Als Schlagzähigkeitsmodifikator ebenfalls geeignet und bevorzugt ist auch ein Polymer der Formel (III).

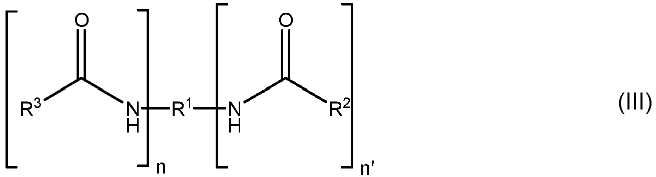

In dieser Formel sind n und n' unabhängig voneinander Werte von 0 bis 7, vorzugsweise 0 oder 1 oder 2, mit der Maßgabe, dass n + n' ein Wert von 1 bis 8, insbesondere 1 oder 2 ist.

Darüber hinaus ist R¹ ein lineares oder verzweigtes Polyurethan-Prepolymer mit n+n' Isocyanatgruppen nach Entfernung aller endständigen Isocyanatgruppen. R² und R³ sind unabhängig voneinander aliphatische, cycloaliphatische, aromatische oder arylaliphatische Gruppen mit 1 bis 20 C-Atomen und gegebenenfalls Heteroatomen, ausgewählt aus O, N und S, insbesondere O und N.

Sind die Substituenten R² und R³ gegenüber Epoxidgruppen reaktiv, so ist der Schlagzähmodifikator der Formel (III) ein Teil der Härter-Komponente. Sind die Substituenten R² und R³ reaktiv gegenüber Aminogruppen, so ist der Schlagzähmodifikator der Formel (III) ein Teil der Harz-Komponente.

Nicht reaktive oder mit beiden Komponenten verträgliche Schlagzähmodifikatoren können entweder in eine oder in beide Komponenten integriert werden. Dieser Grundsatz gilt für alle Schlagzähmodifikatoren, nicht nur für die der Formel (III).

In einer bevorzugten Ausführungsform eines Schlagzähigkeitsmodifikators gemäss Formel (V) ist R¹ ein lineares Polyurethan-Prepolymer, das mindestens n+n' terminale Isocyanatgruppen enthält, nach Entfernung von n+n' terminalen Isocyanatgruppen;
R² und R³ sind Reste von Cardanol nach Entfernung des Hydroxyl-H-Atoms und sind über das Sauerstoffatom gebunden.

Diese Art von Schlagzähigkeitsmodifikatoren sind besonders bevorzugt für die Zusammensetzungen dieser Erfindung. Cardanol wird weiter oben im Zusammenhang mit Formeln (I) und (II) beschrieben.

Die Polyurethan-Prepolymere, welche für Polyurethan-basierte Schlagzähigkeitsmodifikatoren eingesetzt werden, können aus allen handelsüblichen Polyisocyanaten, insbesondere Diisocyanaten, und allen handelsüblichen Polyolen, inbesondere Diolen hergestellt werden. Bevorzugt werden diese aus den Rohstoffen und nach den Herstellverfahren wie in WO/2020/249741 auf Seiten 20-27 beschrieben, hergestellt. Besonders bevorzugt sind Polyetherdiole und 4,4`-, 2,4'- oder 2,2'-Diphenylmethandiisocyanate (MDI) als Rohstoffe.

In einer besonders bevorzugten Verwendung gemäss vorliegender Erfindung ist der Schlagzähigkeitsmodifikator hergestellt aus der Reaktion eines Isocyanatfunktionellen Polyurethanpolymers mit Cardanol. Dabei wird das Isocyanatfunktionelle Polyurethanpolymer bevorzugt aus einem Polyetherdiol und 4,4`-, 2,4'- oder 2,2'-Diphenylmethandiisocyanat (MDI) hergestellt.

Gegebenenfalls enthält der Klebstoff weitere Hilfs- und Zusatzstoffe, wie insbesondere
- weitere Reaktivverdünner, insbesondere epoxidiertes Sojaöl oder Leinöl, Acetoacetatgruppen aufweisende Verbindungen, Butyrolakton, Carbonate, Aldehyde, Isocyanate oder Reaktivgruppen aufweisende Silikone,
- Lösemittel,
- weitere Dimethylaminogruppen aufweisende Verbindungen, insbesondere (Meth)acrylamide wie insbesondere 3-Dimethylaminopropylmethacrylamid,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine,
- Fasern, insbesondere Glasfasern, Kohlefasern, Metallfasern, Keramikfasern, Kunststofffasern wie Polyamidfasern oder Polyethylenfasern oder biobasierte Fasern wie insbesondere Holzfasern, Zellulosefasern, Hanffasern, Flachs (Leinen), Jute oder Kokosfasern,
- Nanofüllstoffe, insbesondere Carbon Nanotubes,
- Pigmente, insbesondere Titandioxid, Eisenoxide oder Chrom(III)oxid,
- Haftvermittler, insbesondere Organoalkoxysilane,
- flammhemmende Substanzen oder
- weitere Additive, insbesondere Stabilisatoren gegen Oxidation, Wärme, Licht oder UV-Strahlung oder Biozide.

Ein bevorzugter Klebstoff für die erfindungsgemässe Verwendung enthält bezogen auf die Harz-Komponente
- 40 bis 90 Gewichts-%, bevorzugt 50 bis 90 Gewichts-% aromatische Epoxid-Flüssigharze,
- optional bis 15 Gewichts-%, bevorzugt 1 bis 10 Gewichts-% Epoxidgruppen-haltigen Reaktivverdünner,
- 5 bis 25 Gewichts-%, bevorzugt 10 bis 20 Gewichts-% Schlagzähigkeitsmodifikator,
- optional bis 5 Gewichts-%, bevorzugt 0.1 bis 3 Gewichts-% Haftvermittler, sowie
- optional bis 55 Gewichts-%, bevorzugt 5 bis 20 Gewichts-% mineralische Füllstoffe, und gegebenenfalls weitere Inhaltsstoffe,
und bezogen auf die Härter-Komponente
- 30 bis 90 Gewichts-%, bevorzugt 25 bis 70 Gewichts-% Amin **A1,**
- gegebenenfalls bis zu 45 Gew.-%, bevorzugt 10 bis 35 Gewichts-% weitere Aminhärter **A,**
- optional bis 10 Gewichts-%, bevorzugt 1 bis 5 Gewichts-% Beschleuniger, sowie
- optional bis 60 Gewichts-%, bevorzugt 20 bis 50 Gew.-% mineralische Füllstoffe,
und gegebenenfalls weitere Inhaltsstoffe.

Das Substrat in der erfindungsgemässen Verwendung ist ein mindestens teilweise mit einem ausgehärteten Epoxidharzklebstoff beschichtetes Substrat jeglicher Art. Normalerweise ist dies der Fall, wenn ein ursprünglich mit einem Epoxidharzklebstoff verklebtes oder beschichtetes Substrat, beispielsweise in einem zu reparierenden Gegenstand, für die erfindungsgemässe Verwendung neu mit einem erfindungsgemässen Klebstoff verklebt wird.

Dabei sind auf der Klebefläche, wo der erfindungsgemässe Klebstoff aufgebracht wird, mindestens teilweise Reste des ursprünglich eingesetzten und insbesondere längst vollständig ausgehärteten Epoxidharzklebstoffs vorhanden.

Als solches mindestens teilweise mit einem insbesondere vollständig ausgehärteten Epoxidharzklebstoff beschichtetes Substrat für die erfindungsgemässe Verwendung geeignet ist insbesondere
- ein Kunststoff wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Beton, Mörtel, Zementestrich, Faserzement, Backstein, Ziegel, Gips, Natursteine wie Granit oder Marmor, Glas oder Glaskeramik;
- Asphalt oder Bitumen;
- Reparatur- oder Nivelliermassen auf Basis PCC (Polymer-modifizierter Zementmörtel) oder ECC (Epoxidharz-modifizierter Zementmörtel);
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) oder Sheet Moulding Compounds (SMC);
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche, insbesondere mit Polyvinylidenfluorid beschichtete Bleche;
- Beschichtungen, Farben oder Lacke, insbesondere beschichtete Böden.

Das mindestens teilweise mit einem ausgehärteten Epoxidharzklebstoff beschichtete Substrat kann bei Bedarf vor dem Applizieren des Klebstoffs vorbehandelt werden, insbesondere durch physikalische und/oder chemische Reinigungsverfahren oder das Aufbringen eines Aktivators oder eines Primers. Bevorzugt wird es abgesehen von einer oberflächlichen Reinigung, insbesondere Entfernen von Staub, nicht vorbehandelt.

Bevorzugt ist das mindestens teilweise mit einem ausgehärteten Epoxidharzklebstoff beschichtete Substrat ausgewählt aus Kunststoffen, Metallen und Legierungen, und insbesondere faserverstärkten Kunststoffen.

Am meisten bevorzugt ist das mindestens teilweise mit einem ausgehärteten Epoxidharzklebstoff beschichtete Substrat ein faserverstärkter Kunststoff, insbesondere ein glasfaserverstärkter Kunststoff.

Am meisten bevorzugt ist mindestens teilweise mit einem ausgehärteten Epoxidharzklebstoff beschichtete Substrat ein Rotorblatt oder ein Teil eines Rotorblattes einer Windkraftanlage.

Der insbesondere vollständig ausgehärtete Epoxidharzklebstoff, mit dem das zu verklebende Substrate mindestens teilweise beschichtet ist, ist nicht besonders limitiert. Es kann sich um einen handelsüblichen Epoxidharzklebstoff handeln, der für strukturelle Verklebungen des jeweiligen Substrates geeignet ist. Insbesondere handelt es sich um einen handelsüblichen zweikomponentigen Epoxidharzklebstoff, wie beispielsweise SikaPower^{®}-830 oder SikaPower^{®}-1200 von Sika. Dabei ist es aber wichtig, dass der Klebstoff zumindest teilweise, bevorzugt vollständig, ausgehärtet ist. Üblicherweise sind solche Klebstoffe, die auf einem zu reparierenden Bauteil vorhanden sind, durch den langen Einsatz des Bauteils bereits vollständig ausgehärtet.

Für die erfindungsgemässe Verwendung werden die Harz- und die Härter-Komponente und gegebenenfalls vorhandene weitere Komponenten des Klebstoffs mit einer geeigneten Methode vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von etwa 1:2 bis 20:1, insbesondere 1:1 bis 5:1.

Das Mischen der Komponenten erfolgt kontinuierlich oder batchweise mittels eines geeigneten Verfahrens, wobei darauf zu achten ist, dass zwischen dem Mischen der Komponenten und der Applikation des vermischten Klebstoffs nicht zu viel Zeit vergeht und die Applikation somit innerhalb der Topfzeit des Klebstoffs erfolgt.

Das Mischen und die Applikation des Klebstoffs erfolgen bevorzugt bei Umgebungstemperatur, welche typischerweise im Bereich von etwa 5 bis 40°C, bevorzugt bei etwa 10 bis 35°C, liegt.

Für die erfindungsgemässe Verwendung wird der vermischte Klebstoff innerhalb der Topfzeit auf das Substrat appliziert.

Die Applikation des Klebstoffs erfolgt bevorzugt von Hand mit einem Spachtelwerkzeug oder einer Maurerkelle. Ebenfalls möglich ist eine Applikation aus einer Kartusche oder mit einer hydraulischen Förderanlage.

Bevorzugt wird der Klebstoff in einer solchen Menge appliziert, dass nach dem Fügen und Verpressen der Substrate die Klebefuge eine Dicke von 0.1 bis 30 mm, bevorzugt von 0.2 bis 5 mm, aufweist.

Das Substrat kann vollflächig oder nur in einem oder mehreren Teilbereichen verklebt werden. Bevorzugt erfolgt die Verklebung in einem oder mehreren Teilbereichen.

Anschliessend an die Applikation des vermischten Klebstoffs wird die Verklebung innerhalb der Offenzeit des Klebstoffs gefügt. Die Topfzeit und die Offenzeit des Klebstoffs hängt von dessen Inhaltsstoffen, dem Vorhandensein von Beschleunigern und der Temperatur ab. Bei Raumtemperatur beträgt die Offenzeit typischerweise etwa 5 Minuten bis etwa 2 Stunden.

Je nach Geometrie der Verklebung ist es vorteilhaft, wenn die Verklebung nach dem Fügen mit einer geeigneten Methode fixiert wird, um ein Verschieben der gefügten Teile zu verhindern, solange der Klebstoff noch zu wenig ausgehärtet ist, um die gefügten Teile in der gewählten Position zu halten.

Nach dem Fügen der Verklebung härtet der Klebstoff aus. Bevorzugt erfolgt die Aushärtung des Klebstoffs ebenfalls bei Umgebungsbedingungen.

Die Aushärtung des Klebstoffs erfolgt durch chemische Reaktion der Inhaltsstoffe. Dabei reagieren die Aminwasserstoffe von primären und sekundären Aminogruppen und gegebenenfalls vorhandene weitere gegenüber Epoxidgruppen reaktive Gruppen mit Epoxidgruppen unter deren Ringöffnung. Allenfalls katalysieren die gegebenenfalls vorhandenen Beschleuniger diese chemischen Reaktionen. Als Ergebnis hauptsächlich dieser Reaktionen polymerisiert der Klebstoff und härtet dadurch aus. Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Ein weiterer Gegenstand der Erfindung ist ein Klebeverbund, erhalten aus der Verwendung wie vorgängig beschrieben.

Bevorzugt weist der Klebeverbund eine Schichtdicke des Klebstoffs von 0.1 bis 30 mm, insbesondere 0.2 bis 5 mm, auf.

Bevorzugt ist der erhaltene Klebeverbund Teil eines Gegenstands oder Bauwerks, insbesondere Teil eines Rotorblatts einer Windkraftanlage. Dabei wird der erhaltene Klebeverbund bevorzugt im Rahmen einer Reparatur- oder Teilersatzmassnahme hergestellt.

Der erhaltene Klebeverbund vermag die verklebten Teile zuverlässig und langlebig zu verbinden und ermöglicht eine zuverlässige Abdichtung gegenüber eindringendem Wasser und gegenüber Gasen wie Methan oder Radon.

Ein weiterer Gegenstand der Erfindung ist ein Klebstoff für die erfindungsgemässe Verwendung wie oben beschrieben, wobei die Harz-Komponente
- 40 bis 90 Gewichts-%, bevorzugt 50 bis 90 Gewichts-% aromatische Epoxid-Flüssigharze,
- optional bis 15 Gewichts-%, bevorzugt 1 bis 10 Gewichts-% Epoxidgruppen-haltigen Reaktivverdünner,
- 5 bis 25 Gewichts-%, bevorzugt 10 bis 20 Gewichts-% Schlagzähigkeitsmodifikator,
- optional bis 5 Gewichts-%, bevorzugt 0.1 bis 3 Gewichts-% Haftvermittler, sowie
- optional bis 55 Gewichts-%, bevorzugt 5 bis 20 Gewichts-% mineralische Füllstoffe,
   und gegebenenfalls weitere Inhaltsstoffe enthält,
und die Härter-Komponente
- 30 bis 90 Gewichts-%, bevorzugt 25 bis 70 Gewichts-% Amin **A1,**
- gegebenenfalls bis zu 45 Gew.-%, bevorzugt 10 bis 35 Gewichts-% weitere Aminhärter **A,**
- optional bis 10 Gewichts-%, bevorzugt 1 bis 5 Gewichts-% Beschleuniger, sowie
- optional bis 60 Gewichts-%, bevorzugt 20 bis 50 Gew.-% mineralische Füllstoffe,
und gegebenenfalls weitere Inhaltsstoffe enthält.

Bevorzugte Ausführungsformen dieses Klebstoffs entsprechen ohne Einschränkung den bevorzugten Ausführungsformen gemäss der erfindungsgemässen Verwendung wie weiter oben beschrieben und sind somit auch für den Klebstoff selbst gültig, solange sie die Definition des Klebstoffs betreffen.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("K") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen:

- BADGE: Bisphenol-A Diglycidylether, EEW ca. 187 g/eq (Araldite^{®} GY 250, von Huntsman)
- BDDGE: 1,4-Butandioldiglycidylether, Reaktivverdünner (Araldite^{®} DY-D, von Huntsman)
- Ancamine 1769: Hydroxyalkyliertes aliphatisches Polyamin Amin **A1** (Ancamine^{®} 1769, von Evonik)
- Ancamine 2167: Cycloaliphatisches Polyamin (Aminhärter) mit aromatischen Strukturelementen (Ancamine^{®} 2167, von Evonik)
- D-230: Polyoxypropylendiamin mit zahlenmittlerer Molmasse von 230 g/mol; Amin **A1** (Jeffamine^{®} D-230, von Huntsman)
- NC-558: Phenalkamin (Cardolite^{®} NC-558, von Cardolite)
- NC-658: Phenalkamin (Cardolite^{®} NC-658, von Cardolite)
- TMD: Isomerengemisch von 2,2,4- und 2,4,4-Trimethylhexamethylendiamin, Amin **A1** (Vestamin^{®} TDM, von Evonik)
- IPDA: Isophorondiamin, cycloaliphatischer Aminhärter, (Vestamin^{®} IPD, von Evonik)
- MXDA: m-Xylylendiamin (1,3-Bis-(aminomethyl)-benzol), arylaliphatischer Aminhärter
- 1922A: [3,3'-(Oxybis(2,1-ethanediyloxy)) bis-1-popanamine], Amin **A1** (Ancamine^{®} 1922 A, von Evonik)
- LITE 2002: Phenalkamin (Cardolite^{®} LITE 2002, von Cardolite)
- Schlagzähigkeits- modifikator: Cardanol-endgecapptes Polyurethanpolymer; hergestellt wie nachfolgend beschrieben
- Beschleuniger: Tris-(dimethylaminomethyl)phenol (Ancamine^{®} K54, von Evonik)
- Haftvermittler: 3-Glycidoxypropyltrimethoxysilan
- Füllstoff 1: gefällte, oberflächenbehandelte Kreide
- Füllstoff 2: pyrogene Kieselsäure

### Schlagzähigkeitsmodifikator:

Unter Stickstoffatmosphäre wurden 5687 g Acclaim^{®} 4200 Polyol (Polyetherdiol von Bayer MaterialScience), 712 g Diphenylmethandiisocyanat (MDI) mit dem Handelsnamen Desmodur 44 MC L (Covestro) und 0,6 g Katalysator DABCO 33 LV (Air Products) unter ständigem Rühren auf 80 ° C erhitzt und bei dieser Temperatur belassen, um ein NCO-terminiertes Präpolymer herzustellen. Nach einer Stunde Reaktionszeit wurde der Gehalt an freiem NCO durch Titration bestimmt. Er hatte einen Gehalt an Isocyanatgruppen von 1,9 Gew.-% erreicht. Anschliessend wurden 910 g Cardanol mit dem Handelsnamen Cardolite NC-700 (Cardolite) zugegeben und weitere 2 Stunden bei 80 °C gerührt. Die Reaktion wurde gestoppt, sobald kein freies Isocyanat mehr durch IR-Spektroskopie nachweisbar war (Wellenzahlen 2275 - 2230 cm⁻¹).

### Herstellung von Klebstoffen und Verklebungen:

### Beispiele 1 bis 13:

Für jedes Beispiel wurde eine identische Harz-Komponente hergestellt, indem die in Tabelle 1 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt wurden.

**Tabelle 1: Harz-Komponente für die Beispielzusammensetzungen.**

| **Bestandteil der Harz-Komponente** | **Menge (Gewichtsteile)** |
|---|---|
| BADGE | 70 |
| BDDGE | 16 |
| Schlagzähigkeitsmodifikator | 6 |
| Haftvermittler | 1 |
| Füllstoff 2 | 3 |
| Füllstoff 1 | 4 |

Weiterhin wurde für jedes Beispiel eine individuelle Härter-Komponente hergestellt, indem die in den Tabellen 2 und 3 angegebenen Inhaltsstoffe der jeweiligen Härter-Komponente in den angegebenen Mengen (in Gewichtsteilen) mittels des Zentrifugalmischers vermischt und unter Ausschluss von Feuchtigkeit aufbewahrt wurden. Die Härter-Komponenten jedes Beispiels unterschieden sich lediglich durch die Art des verwendeten Aminhärters. Die Art der restlichen Bestandteile und die Mengen aller Bestandteile waren stets identisch. Tabelle 2 zeigt die generelle Formulierung jeder Härter-Komponente und Tabelle 3 zeigt, welche(s) Amin(e) als Amin **A** in jeder spezifischen Härter-Komponente eingesetzt wurde.

**Tabelle 2: Härter-Komponente für die Beispielzusammensetzungen.**

| **Bestandteil der Härter-Komponente** | **Menge (Gewichtsteile)** |
|---|---|
| Aminhärter A | 52 |
| Beschleuniger | 4.5 |
| Füllstoff 1 | 39.50 |
| Füllstoff 2 | 4 |

Für jedes Beispiel wurden dann die Harz-Komponente und die Härter-Komponente mittels des Zentrifugalmischers zu einer homogenen Paste verarbeitet, wobei die jeweilige Menge jeder Härter-Komponente in jeder Mischung so abgemessen wurde, dass ein molares Verhältnis von Epoxidgruppen der Harz-Komponente zu Aminwasserstoffen der Härter-Komponente von 1:1 vorlag. Die so hergestellten Mischungen wurden unverzüglich folgendermassen geprüft:

Die **Zugscherfestigkeit** wurde auf glasfaserverstärkten Epoxidharzplatten der Firma Rocholl (Deutschland) der Dimension 100 x 25 x 10 mm durchgeführt, welche vor der Messung mit einem zweikomponentigen Epoxidharzklebstoff (SikaPower^{®}-830, ein lösemittelfreier Amin-gehärteter Epoxidharzklebstoff für Rotorblätter von Windkraftanlagen) beschichtet wurden. SikaPower^{®}-830 wurde dazu auf beiden zur Prüfung benötigten Platten mit einer Sichtdicke von 0.5 mm aufgetragen und während 4h bei 70°C aushärten gelassen. Anschliessend wurden die Platten auf 23°C abgekühlt. Für die Messung wurden Verbundkörper hergestellt, indem zwei mit SikaPower^{®}-830 beschichtete Platten mittels der zu prüfenden Klebstoffzusammensetzung **C1** bis **C14** so verklebt wurden, dass die überlappende Klebeverbindung eine Dimension von 12.5 x 25 mm und eine Dicke von 3 mm aufwies. Die Verklebung wurde bei beiden Platten auf der mit SikaPower^{®}-830 beschichteten Seite aufgebracht. Nach einer Lagerung der Verbundkörper während 7 Tagen im Normklima wurde die Zugscherfestigkeit nach DIN EN 1465 bei einer Zuggeschwindigkeit von 10 mm/min geprüft.

Die Resultate sind in Tabelle 3 angegeben.

**Tabelle 3: Aminhärter A, welche in der jeweiligen Härter-Komponente jeder Beispielzusammensetzung eingesetzt wurden und Resultate der Zugscherfestigkeitsmessungen. «(Ref.)» bezeichnet Referenzzusammensetzungen nicht nach der Erfindung.**

| **Beispiel** | Aminhärter **A** | **LSS [MPa]** |
|---|---|---|
| **C1** | Ancamine 1769 | 18.5 |
| **C2** (Ref.) | Ancamine 2167 | 2.8 |
| **C3** | D-230 | 24.0 |
| **C4** (Ref.) | NC-558 | 8.7 |
| **C5** (Ref.) | IPDA | 2.3 |
| **C6** (Ref.) | MXDA | 8.2 |
| **C7** | 1922A | 20.7 |
| **C8** | TMD | 19.5 |
| **C9** (Ref.) | LITE 2002 | 8.2 |
| **C10** (Ref.) | NC-658 | 4.6 |
| **C11** (Ref.) | 30 Gew.-% D-230 + 70 Gew.-% Ancamine 2167 | 9.2 |
| **C12** (Ref.) | 40 Gew.-% D-230 + 60 Gew.-% Ancamine 2167 | 9.4 |
| **C13** | 50 Gew.-% D-230 + 50 Gew.-% Ancamine 2167 | 14.5 |

Die Resultate in Tabelle 3 zeigen, dass die erfindungsgemässen Klebstoffe Klebeverbunde ermöglichen, die hinsichtlich der Zugscherfestigkeit sehr hochwertig sind. Sie weisen alle eine Zugscherfestigkeit von mindestens 10 MPa oder höher auf. Die Referenzzusammensetzungen ohne oder mit zu geringen Anteilen an Amin **A1** dagegen zeigen mangelhafte Zugscherfestigkeiten im direkten Vergleich.

## Patentansprüche

1. Verwendung eines Klebstoffs zum Verkleben eines mindestens teilweise mit einem ausgehärteten Epoxidharzklebstoff beschichteten Substrates, **dadurch gekennzeichnet, dass** der Klebstoff
- eine Harz-Komponente enthaltend mindestens ein Epoxidharz und
- eine Härter-Komponente enthaltend mindestens ein Amin **A1** mit mindestens einer aliphatischen Aminogruppe, wobei Amin **A1** ausgewählt ist aus Polyetheraminen und linearen oder verzweigten, aber nicht zyklischen, aliphatischen Polyaminen,
umfasst, wobei das Amin **A1** mindestens 50 Gewichts-% aller in der Härter-Komponente enthaltenen Aminhärter **A** mit mindestens einem Aminwasserstoff ausmacht, bezogen auf alle Aminhärter **A** in der Härter-Komponente.

2. Verwendung gemäss Anspruch 1, **dadurch gekennzeichnet, dass** die Harz-Komponente mindestens ein aromatisches Epoxid-Flüssigharz enthält.

3. Verwendung gemäss einem der Ansprüche 1 oder 2, **dadurch gekennzeichnet, dass** das Amin **A1** ausgewählt ist aus der Gruppe bestehend aus 2-Dimethylaminoethylamin, 3-Dimethylaminopropylamin, 4-Dimethylaminobutylamin, 6-Dimethylaminohexylamin, 2-(2-Dimethylaminoethylamino)ethylamin, 2-(3-Dimethylaminopropylamino)ethylamin, 3-(2-Dimethylaminoethylamino)propylamin, 3-(3-Dimethylaminopropylamino)propylamin, 1,5-Diamino-2-methylpentan, 1,6-Hexandiamin, 2,2(4),4-Trimethyl-1,6-hexandiamin, 2-Butyl-2-ethyl-1,5-pentandiamin, Diethylentriamin, Triethylentetramin, Tetraethylenpentamin, Dipropylentriamin, N-(2-Aminoethyl)-1,3-propandiamin, N,N'-Bis(3-aminopropyl)ethylendiamin, Bis(1,6-hexylen)triamin, Polyetheraminen, und Kombinationen aus zwei oder mehr dieser Amine.

4. Verwendung gemäss einem der Ansprüche 1 bis 3, **dadurch gekennzeichnet, dass** das Amin **A1** mindestens ein Polyetheramin umfasst, insbesondere ein Polyoxyalkylendiamin, bevorzugt mit einem zahlenmittleren Molekulargewicht zwischen 170 und 500 g/mol.

5. Verwendung gemäss einem der Ansprüche 1 bis 4, **dadurch gekennzeichnet, dass** neben Amin **A1** noch weitere Aminhärter **A** in der Härterkomponente enthalten sind, insbesondere ausgewählt aus Phenalkaminen, cycloaliphatischen Polyaminen, aromatischen Polyaminen, und/oder aminfunktionellen Addukten aus Polyaminen mit Epoxidharzen.

6. Verwendung gemäss einem der Ansprüche 1 bis 5, **dadurch gekennzeichnet, dass** das Amin **A1** mindestens 55 Gewichts-%, bevorzugt mindestens 60 Gewichts-%, insbesondere mindestens 75 Gewichts-% aller in der Härter-Komponente enthaltenen Aminhärter **A** mit mindestens einem Aminwasserstoff ausmacht, bezogen auf alle Aminhärter **A** in der Härter-Komponente.

7. Verwendung gemäss einem der Ansprüche 1 bis 6, **dadurch gekennzeichnet, dass** Mischungsverhältnis der Harz-Komponente und der Härter-Komponente so gewählt wird, dass das molare Verhältnis der gegenüber Epoxidgruppen reaktiven Gruppen zu den Epoxidgruppen im Bereich von 0.5 bis 1.5, insbesondere 0.7 bis 1.2, liegt.

8. Verwendung gemäss einem der Ansprüche 1 bis 7, **dadurch gekennzeichnet, dass** die Härter-Komponente zwischen 25 Gewichts-% und 75 Gewichts-%, bevorzugt zwischen 30 Gewichts-% und 70 Gewichts-%, insbesondere zwischen 40 Gewichts-% und 60 Gewichts-%, Amin **A1,** bezogen auf die gesamte Härter-Komponente, enthält.

9. Verwendung gemäss einem der Ansprüche 1 bis 8, **dadurch gekennzeichnet, dass** der Klebstoff mindestens einen weiteren Inhaltsstoff ausgewählt aus Verdünnern, Füllstoffen, Haftvermittlern, Beschleunigern und oberflächenaktiven Verbindungen enthält.

10. Verwendung gemäss einem der Ansprüche 1 bis 9, **dadurch gekennzeichnet, dass** die Harz-Komponente mindestens einen Schlagzähigkeitsmodifikator umfasst, bevorzugt einen Schlagzähigkeitsmodifikator auf Polyurethan-Basis.

11. Verwendung gemäss Anspruch 10, **dadurch gekennzeichnet, dass** der Schlagzähigkeitsmodifikator hergestellt ist aus der Reaktion eines Isocyanatfunktionellen Polyurethanpolymers mit Cardanol.

12. Verwendung gemäss einem der Ansprüche 1 bis 11, **dadurch gekennzeichnet, dass** die Harz-Komponente
- 40 bis 90 Gewichts-% aromatische Epoxid-Flüssigharze,
- optional bis 15 Gewichts-% Epoxidgruppen-haltigen Reaktivverdünner,
- 5 bis 25 Gewichts-% Schlagzähigkeitsmodifikator,
- optional bis 5 Gewichts-% Haftvermittler, sowie
- optional bis 55 Gewichts-% mineralische Füllstoffe,
und gegebenenfalls weitere Inhaltsstoffe enthält,
und die Härter-Komponente
- 30 bis 90 Gewichts-% Amin **A1,**
- gegebenenfalls bis zu 45 Gew.-% weitere Aminhärter **A,**
- optional bis 10 Gewichts-% Beschleuniger, sowie
- optional bis 60 Gewichts-% mineralische Füllstoffe,
und gegebenenfalls weitere Inhaltsstoffe enthält.

13. Verwendung gemäss einem der Ansprüche 1 bis 12, **dadurch gekennzeichnet, dass** das mindestens teilweise mit einem ausgehärteten Epoxidharzklebstoff beschichtete Substrat ein faserverstärkter Kunststoff ist, insbesondere ein glasfaserverstärkter Kunststoff.

14. Klebeverbund erhalten aus der Verwendung gemäss einem der Ansprüche 1 bis 13, insbesondere auf oder in einem Rotorblatt einer Windkraftanlage.

15. Klebstoff für die Verwendung gemäss Anspruch 12.
